# EUROPEAN PATENT SPECIFICATION

(11) **EP 3 703 508 B1**
(45) Date of publication and mention of the grant of the patent: **17.03.2021**
(21) Application number: 18701386.7
(22) Date of filing: 15.01.2018
(51) Int. Cl.: A23K 50/80, A01K 61/59, A01K 61/20

(54) **METHOD FOR PRODUCING LIVE AQUACULTURE FEED**
VERFAHREN ZUR HERSTELLUNG VON LEBENDEM AQUAKULTURFUTTER
PROCÉDÉ DE PRODUCTION D'ALIMENT VIVANT POUR AQUACULTURE

(43) Date of publication of application: 09.09.2020
(73) Proprietor: Pearl Aqua Co., Ltd., Chonburi Province 20000 (TH)
(72) Inventor: VAN NIEUWENHOVE, Luciaan, Bangkok, 10600 (TH)
(74) Representative: Lind, Robert
(86) International application number: PCT/SG2018/050021
(87) International publication number: WO 2019/139538

(56) References cited:
- EP-A1- 3 175 704
- WO-A1-2004/057952
- WO-A1-2009/101095
- CN-A- 103 350 026
- US-A1- 2010 218 727

## Description

### Field of the Invention

The present invention relates to aquaculture in general and more particularly to a method for producing a live aquaculture feed.

### Background of the Invention

Live food organisms are an important source of food for farmed aquatic organisms. Production of live food organisms involves incubating cysts in a hatching medium so that a portion of the cysts hatch and release free-swimming live food organisms. After hatching, the live food organisms are required to be separated from unhatched cysts and empty cyst shells as these are indigestible and if ingested by an aquatic organism, may cause gut obstruction, resulting in death of the aquatic organism. Conventional separation techniques are however time-consuming and often cause damage to the live food organisms.

It is therefore desirable to provide an efficient method for producing a live aquaculture feed that reduces damage to the live food organisms.

WO2009101095 describes cysts provided with magnetic particles comprising a metal oxide. The magnetic particles allow free-swimming *Artemia nauplii* to be separated from unhatched cysts and empty cyst cells using magnets.

### Summary of the Invention

Accordingly, in one aspect, the present invention provides a method of producing a live aquaculture feed. The method includes providing a plurality of cysts having a catalyst on a surface thereof, incubating the cysts in a liquid medium to hatch a portion of the cysts and release a plurality of live food organisms, reacting the catalyst on the surface of the cysts with a gas-producing reagent to generate a plurality of bubbles that cause unhatched cysts and cyst shells to surface, and separating the live food organisms from the unhatched cysts and the cyst shells that surface.

Other aspects and advantages of the invention will become apparent from the following detailed description, taken in conjunction with the accompanying drawings, illustrating by way of example the principles of the invention.

### Brief Description of the Drawings

Embodiments of the invention will now be described, by way of example only, with reference to the accompanying drawings, in which:
FIG. 1 is a schematic diagram of an apparatus for producing a live aquaculture feed in accordance with an embodiment of the present invention; and
FIG. 2 is a schematic flow diagram illustrating a method for producing a live aquaculture feed in accordance with an embodiment of the present invention.

### Detailed Description of Exemplary Embodiments

The detailed description set forth below is intended as a description of presently preferred embodiments of the invention, and is not intended to represent the only forms in which the present invention may be practiced.

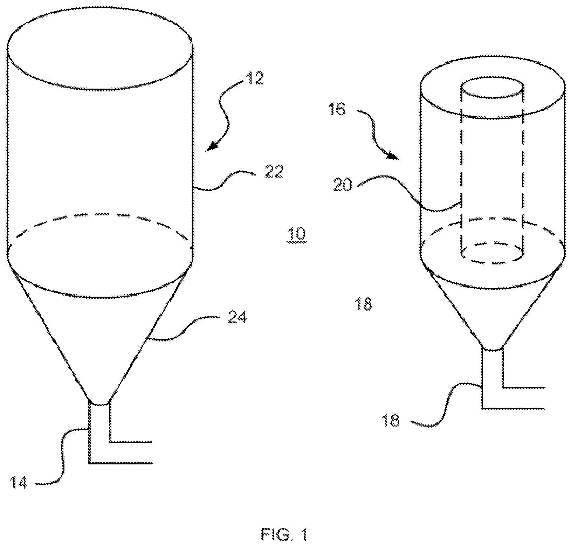

Referring now to FIG. 1, an apparatus 10 for producing a live aquaculture feed is shown. In the present embodiment, the apparatus 10 includes a first tank or container 12 having a first outlet 14 and a second tank or container 16 having a second outlet 18. The second tank 16 may be provided with a filter 20. One of or both the first and second tanks 12 and 16 may be aerated, preferably from the bottom. One or more light sources (not shown) may be provided at or near one of or both the first and second outlets 14 and 18 to attract live food organisms to the respective first and second outlets 14 and 18.

In the embodiment shown, the first tank 12 serves as an incubation or hatching tank. To optimise hatching results, the first tank 12 may have a cylindrical body 22 and a conical base 24 to reduce or minimise dead spots where cysts and live food organisms tend to accumulate and consequently suffer from oxygen depletion. To facilitate inspection of the hatching suspension, especially during harvesting, the first tank 12 may be transparent or translucent. In one embodiment, the first tank 12 may have a volume of 2000 litres (I).

In the present embodiment, the second tank 16 serves as a separation tank. The second tank 16 may have the same characteristics as the first tank 12, but is preferably of a smaller volume. In one embodiment, the second tank 16 may have 10 percent (%) of the volume of the first tank 12.

The filter 20 provided in the second tank 16 serves to separate the cysts and the live food organisms from a liquid medium as the filter 20 is designed to allow only the liquid medium to pass through. In one embodiment, the filter 20 is provided with a plurality of horizontal slits or slots that are effective in separating the liquid medium from the cysts and the live food organisms.

A hose (not shown) having a plurality of holes may be provided to supply bubbles to continuously clean the filter 20 during a concentration process.

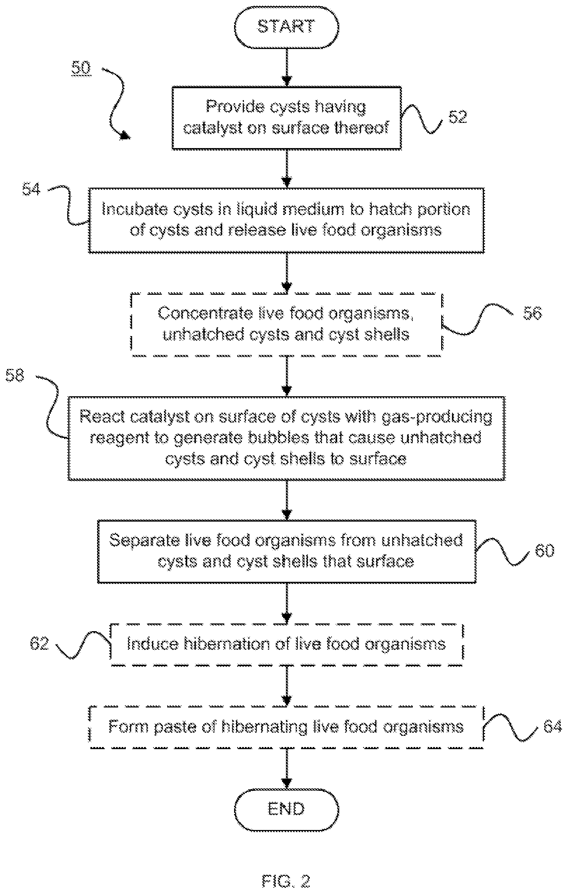

Having described various elements of the apparatus 10 for producing a live aquaculture feed, a method for producing a live aquaculture feed with the apparatus 10 of FIG. 1 will now be described below with reference to FIG. 2.

Referring now to FIG. 2, a method 50 for producing a live aquaculture feed in accordance with an embodiment of the present invention is shown. The method 50 begins at step 52 with the provision of a plurality of cysts having a catalyst on a surface thereof.

The term "cyst" and the like as used herein refer to eggs of water animals such as, for example, rotifers, Artemia and the like.

The catalyst on the surface of the cysts may be any compound or substance that is able to catalyse a gas-releasing reaction of a gas-producing reagent. In one embodiment, the catalyst may be a metal oxide such as, for example, manganese dioxide.

In one embodiment, the cysts having the catalyst on the surface thereof may be provided by providing a catalyst precursor solution and contacting the cysts with the catalyst precursor solution to produce the cysts having the catalyst on the surface thereof. In such an embodiment, the catalyst precursor solution may be in the form of a liquid suspension, preferably an aqueous suspension, that may be applied as a coating onto the cysts.

The catalyst precursor solution may be provided by mixing a catalyst precursor with water. In one embodiment, the catalyst precursor may be a water-soluble permanganate such as, for example, potassium permanganate. In such an embodiment, dry permanganate may be mixed with water to form a liquid coating containing water-soluble permanganate, a strong oxidiser, which when applied or coated onto the surface of the cysts, reacts with the organic matter of the cyst shells and transforms into manganese dioxide which is no longer water soluble and thus remains on the cyst shells even after incubation is completed. The quantity or amount of catalyst precursor used to prepare the catalyst precursor solution may be calculated or determined based on the mass of the cysts to be incubated. In one embodiment, a mass ratio of the catalyst precursor to the cysts may be between about 0.0005:1 and about 0.015:1, more preferably, between about 0.001:1 and about 0.01:1.

At step 54, the cysts are incubated in a liquid medium to hatch a portion of the cysts and release a plurality of live food organisms. In an embodiment where the cysts are Artemia cysts, the live food organisms that are released from the hatched cysts are free swimming Artemia nauplii.

In the present embodiment, incubation and hatching of the cysts are performed in the first tank 12. After hatching, aeration may be stopped to allow the different objects in the first tank 12, specifically, the live food organisms, unhatched cysts and empty cyst shells, to separate. Aeration may be stopped by removing an aeration tube (not shown) from the first tank 12. When aeration is stopped, most of the empty cyst shells rise to the surface of the liquid hatching medium as empty cyst shells tend to float, whereas most of the unhatched cysts settle at the bottom of the first tank 12 as unhatched cysts tend to sink. The live food organisms swimming freely in the first tank 12 may be attracted to the one or more light sources at or near the first outlet 14 of the first tank 12 and concentrate at the bottom of the first tank 12. The live food organisms may not however be allowed to settle for too long at the bottom of the first tank 12 to prevent the live food organisms from dying off due to oxygen depletion.

A mixture of the live food organisms, the unhatched cysts and the cyst shells may be concentrated at step 56 before reacting the catalyst on the surface of the cysts with a gas-producing reagent. Advantageously, this reduces the quantity or amount of the gas-producing reagent required for separation of the unhatched cysts and the cyst shells from the live food organisms. Concentrating the mixture of the live food organisms together with the unhatched cysts, the cyst shells and other impurities may be performed by removing a portion of the liquid medium. In one embodiment, between about 70 volume percent (vol%) to about 90 vol% of the liquid medium may be removed.

In the present embodiment, concentration of the mixture of the live food organisms, the unhatched cysts and the cyst shells may be performed by removing or tapping off a portion of the liquid medium containing the live food organisms, the unhatched cysts and some empty cyst shells from the first tank 12 via the first outlet 14 at the bottom of the first tank 12 and transferring the mixture of the live food organisms, the unhatched cysts and the cyst shells to the smaller second tank 16. The volume of the liquid medium in the second tank 16 may be about 10 vol% to about 30 vol% of the volume of the liquid medium in the first tank 12. As the filter 20 provided in the second tank 16 only allows the liquid medium to pass through, the live food organisms, the unhatched cysts and the cyst shells are retained in the second tank 16, whereas the liquid medium is evacuated or removed from the second tank 16 via the second outlet 18. More particularly, when the transfer takes place, the liquid medium flows from an outer side of the filter 20 to an inner side of the filter 20 where the liquid medium is drained. Consequently, the live food organisms, the unhatched cysts and the cyst shells are concentrated at the outer side of the filter 20. The concentration process may continue until the entire content of the first tank 12 is transferred over to the second tank 16. In this manner, the entire content of the first tank 12 may be concentrated in the smaller second tank 16 as the same quantity of live food organisms, unhatched cysts and cyst shells are transferred from a larger volume in the first tank 12 to a smaller volume in the second tank 16. Advantageously, such a setup concentrates the mixture of the live food organisms, the unhatched cysts and the cyst shells without damaging the live food organisms during the concentration process.

At step 58, the catalyst on the surface of the cysts is reacted with the gas-producing reagent to generate a plurality of bubbles that cause unhatched cysts and cyst shells to surface. More particularly, the catalyst on the surface of the cysts, which when brought into contact with the gas-producing reagent, induces or triggers a reaction of the gas-producing reagent, causing the gas-producing reagent to generate the bubbles. This may be after aeration in the second tank 16 is stopped.

During the catalytic reaction between the catalyst on the surface of the cysts and the gas-producing reagent in the second tank 16, microbubbles may be formed that attach to the cysts and other impurities in the liquid medium, bringing these to the surface of the liquid medium. In this manner, all organic matter such as, for example, insect remains, plant parts, algae and other impurities that were coated with the catalyst rises to the surface as well after addition of the gas-producing reagent to the liquid medium.

As the catalyst is not consumed during the reaction, the quantity of the catalyst on the surface of each unhatched cyst and each cyst shell is the same before and after the reaction with the gas-producing reagent. Advantageously, this allows continuous production of bubbles on the surface of each unhatched cyst and each cyst shell as long as there is unconsumed gas-producing reagent in the liquid medium. Thus, even if some of the unhatched cysts and/or the cyst shells were to lose bubbles, new ones would continue to be formed on the surfaces of the unhatched cysts and/or the cyst shells. Another advantage is that it would be simple and easy to re-start the separation process if required by simply adding more of the gas-producing reagent since the catalyst on the surface of the unhatched cysts and/or the cyst shells remains intact.

The gas-producing reagent used may be in liquid or dry form and may be one of hydrogen peroxide, an inorganic peroxide and a hydrogen peroxide adduct. Advantageously, when a source of hydrogen peroxide is used as the gas-producing reagent, oxygen and water are produced during the reaction which are not only environmentally harmless, but also provide the live food organisms with extra oxygen. In one embodiment, the gas-producing reagent may be a dry granulate such as, for example, sodium percarbonate, which is stable and easy to store and use. In an embodiment where a dry form of the gas-producing reagent is used, the gas-producing reagent may be added to the liquid medium in the second tank 16 and mixed with the liquid medium until dissolved.

In an embodiment where the catalyst is manganese dioxide and the gas-producing reagent is hydrogen peroxide, an inorganic peroxide or a hydrogen peroxide adduct, the catalyst acts to speed up decomposition of the hydrogen peroxide forming bubbles as a result.

The quantity or amount of gas-producing reagent required is dependent on the concentration of the live food organisms, the unhatched cysts, the cyst shells and impurities in the second tank 16 and also, in the case where a hydrogen peroxide source is used as the gas-producing reagent, on the percentage of active oxygen in the hydrogen peroxide source. In one embodiment, the gas-producing reagent may have an active oxygen content of between about 5 percent (%) and about 25 %. A mass ratio of the gas-producing reagent to the liquid medium in the separation or second tank 16 may between about 0.002:1 and about 0.025:1, more preferably between about 0.005:1 and about 0.015:1. In an embodiment where sodium percarbonate with an active oxygen content of about 15 percent (%) is used as the gas-producing reagent, the quantity or amount of gas-producing reagent required may be between about 0.2 % and about 2.5 %, more preferably between about 0.5 % and about 1.5% of the volume of the liquid medium in the separation or second tank 16.

Unlike the case of the unhatched cysts, the cyst shells and impurities in the second tank 16, the bubbles generated tend not to become attached to the live food organisms as the swimming movements of the live food organisms cause any attached bubbles to become detached. Furthermore, as the newly hatched live food organisms are generally not good swimmers, the live food organisms tend to settle at the bottom of the second tank 16 and are therefore easily evacuated or tapped from the second tank 16 via the second outlet 18 at the bottom of the second tank 16. In this manner, the live food organisms are separated from the unhatched cysts and the cyst shells that surface at step 60. Advantageously, because everything that is not swimming is pushed or forced to the surface by the bubbles, a very pure separation may be achieved. When separation is completed, all the unhatched cysts and cyst shells tend to accumulate at the surface of the liquid medium.

In the present embodiment, hibernation of the live food organisms may be induced at step 62 after separation of the live food organisms from the unhatched cysts and the cyst shells. During hibernation, the live food organisms stop swimming and their development is halted. This greatly reduces their oxygen demand. Advantageously, hibernation prevents the live food organisms from developing into bigger animals, which would render them unsuitable for their purpose. Hibernation also reduces loss of energy by the live food organisms which would decrease their nutritional value.

Hibernation of the live food organisms may be induced by cooling the live food organisms to a temperature of between about 0 degrees Celsius (°C) and about 6 °C. This may be by introducing the separated live food organisms into large cooling tanks containing seawater where the live food organisms are cooled down over several hours to between about 0 °C and about 6 °C to induce hibernation. The cooling down step forces the live food organisms to go into a state of dormancy where their movements are minimal and thus their oxygen consumption is greatly reduced.

In the present embodiment, a paste of hibernating live food organisms may be formed at step 64. This may be by harvesting the hibernating live food organisms after the cooling down period, concentrating the hibernating live food organisms in a sieve and draining away excess water in the sieve on an icy surface. In one embodiment, the sieve may be a nylon sieve bag and the sieve bag may be placed on ice cubes or crushed ice in a large cool box to drain out the excess water until the hibernating live food organisms form the paste. Advantageously, it has been found that putting the sieve bag on ice is a fast and effective way to drain out the excess water as the ice bed pulls water out from the sieve bag rather quickly (in about 10 to 20 minutes). Furthermore, the ice bed also helps the hibernating live food organisms stay cool which is important for maintaining the hibernation state of the live food organisms. Further advantageously, creating a paste of the hibernating live food organisms helps ensure that users receive a consistent quantity of the hibernating live food organisms without significant variation in water content. The paste of drained live food organisms may be such that the mass of the live food organisms has the physical characteristics of a paste.

After draining, the paste of hibernating live food organisms may be removed from the sieve and placed in trays for sale. The trays containing the paste of hibernating live food organisms may be kept at temperatures close to zero in cool boxes for delivery. The hibernating live food organisms in paste form are alive and are able to start swimming within minutes once introduced into a shrimp or fish tank.

As is evident from the foregoing discussion, the present invention provides an efficient method for producing a live aquaculture feed that reduces damage to the live food organisms. The method of the present invention enables effective separation of unhatched cysts and also empty cyst shells from free swimming live food organisms with reduced risk of damaging or killing the free swimming live food organisms. Further advantageously, the hibernation and paste formation process helps ensure that the live food organisms are kept alive in an easily transportable state.

While preferred embodiments of the invention have been described, it will be clear that the invention is not limited to the described embodiments only. Numerous modifications, changes, variations, substitutions and equivalents will be apparent to those skilled in the art without departing from the scope of the invention as described in the claims.

Further, unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A method (50) for producing a live aquaculture feed, comprising:
providing (52) a plurality of cysts having a catalyst on a surface thereof; and
incubating (54) the cysts in a liquid medium to hatch a portion of the cysts and release a plurality of live food organisms;
and **characterised by**:
reacting (58) the catalyst on the surface of the cysts with a gas-producing reagent to generate a plurality of bubbles that cause unhatched cysts and cyst shells to surface; and
separating (60) the live food organisms from the unhatched cysts and the cyst shells that surface.

2. The method of claim 1, wherein the catalyst is a metal oxide.

3. The method of claim 2, wherein the metal oxide is manganese dioxide.

4. The method of any one of the preceding claims, wherein the step of providing (52) the cysts having the catalyst on the surface thereof comprises:
providing a catalyst precursor solution; and
contacting the cysts with the catalyst precursor solution to produce the cysts having the catalyst on the surface thereof.

5. The method of claim 4, wherein the step of providing the catalyst precursor solution comprises mixing a catalyst precursor with water.

6. The method of claim 5, wherein the catalyst precursor is potassium permanganate.

7. The method of claim 5 or 6, wherein a mass ratio of the catalyst precursor to the cysts is between about 0.0005:1 and about 0.015:1.

8. The method of claim 7, wherein the mass ratio of the catalyst precursor to the cysts is between about 0.001:1 and about 0.01:1.

9. The method of any one of the preceding claims, wherein a mass ratio of the gas-producing reagent to the liquid medium in a separation tank is between about 0.002:1 and about 0.025:1.

10. The method of claim 9, wherein the mass ratio of the gas-producing reagent to the liquid medium in the separation tank is between about 0.005:1 and about 0.015:1.

11. The method of any one of the preceding claims, wherein the gas-producing reagent has an active oxygen content of between about 5 percent (%) and about 25 %.

12. The method of any one of the preceding claims, wherein the gas-producing reagent is one of hydrogen peroxide, an inorganic peroxide and a hydrogen peroxide adduct.

13. The method of claim 12, wherein the gas-producing reagent is sodium percarbonate.

14. The method of any one of the preceding claims, further comprising concentrating a mixture of the live food organisms, the unhatched cysts and the cyst shells before reacting the catalyst on the surface of the cysts with the gas-producing reagent.

15. The method of claim 14, wherein the step of concentrating the mixture of the live food organisms, the unhatched cysts and the cyst shells comprises removing between about 70 volume percent (vol%) to about 90 vol% of the liquid medium.

16. The method of any one of the preceding claims, further comprising inducing (64) hibernation of the live food organisms after separation from the unhatched cysts and the cyst shells.

17. The method of claim 16, wherein the step of inducing hibernation (64) of the live food organisms comprises cooling the live food organisms to a temperature of between about 0 degrees Celsius (°C) and about 6 °C.

18. The method of claim 16 or 17, further comprising forming a paste of hibernating live food organisms.

19. The method of claim 18, wherein the step of forming the paste of hibernating live food organisms comprises:
concentrating the hibernating live food organisms in a sieve; and
draining away excess water in the sieve on an icy surface.

## Patentansprüche

1. Verfahren (50) zur Herstellung von lebendem Aquakulturfutter, Folgendes umfassend:
Bereitstellen (52) einer Vielzahl von Zysten, welche einen Katalysator an einer Oberfläche davon aufweist; und
Inkubieren (54) der Zysten in einem flüssigen Medium, zum Ausbrüten eines Teils der Zysten und Freisetzen einer Vielzahl von lebendigen Futterorganismen;
und **gekennzeichnet durch**:
Reagieren (58) des Katalysators an der Oberfläche der Zysten mit einem Gas entwickelnden Reagenz zum Erzeugen einer Vielzahl von Blasen, welche ungeschlüpfte Zysten und Zystenschalen dazu veranlassen an die Oberfläche aufzutauchen; und
Trennen (60) der lebendigen Futterorgansimen von ungeschlüpften Zysten und Zystenschalen, die an die Oberfläche auftauchen.

2. Verfahren nach Anspruch 1, wobei der Katalysator ein Metalloxid ist.

3. Verfahren nach Anspruch 2, wobei das Metalloxid Mangandioxid ist.

4. Verfahren nach einem der vorhergehenden Ansprüche, wobei der Schritt des Bereitstellens (52) der Zysten, welche den Katalysator an der Oberfläche davon aufweisen, Folgendes umfasst:
Bereitstellen einer Katalysator-Vorläuferlösung; und
Inkontaktbringen der Zysten mit der Katalysator-Vorläuferlösung zum Herstellen der Zysten, welche den Katalysator an der Oberfläche davon aufweisen.

5. Verfahren nach Anspruch 4, wobei der Schritt des Bereitstellens der Katalysator-vorläuferlösung Mischen eines Katalysator-Vorläufers mit Wasser umfasst.

6. Verfahren nach Anspruch 5, wobei der Katalysator-Vorläufer Kaliumpermanganat ist.

7. Verfahren nach Anspruch 5 oder 6, wobei ein Gewichtsverhältnis des Katalysator-Vorläufers zu den Zysten zwischen ungefähr 0,0005:1 und ungefähr 0,015:1 beträgt.

8. Verfahren nach Anspruch 7, wobei ein Gewichtsverhältnis des Katalysator-Vorläufers zu den Zysten zwischen ungefähr 0,001:1 und ungefähr 0,01:1 beträgt.

9. Verfahren nach einem der vorhergehenden Ansprüche, wobei ein Gewichtsverhältnis des Gas entwickelnden Reagenzes zu dem flüssigen Medium in einem Abscheidetank zwischen ungefähr 0,002:1 und ungefähr 0,025:1 beträgt.

10. Verfahren nach Anspruch 9, wobei das Gewichtsverhältnis des Gas entwickelnden Reagenzes zu dem flüssigen Medium in dem Abscheidetank zwischen ungefähr 0,005:1 und ungefähr 0,015:1 beträgt.

11. Verfahrenen nach einem der vorhergehenden Ansprüche, wobei das Gas entwickelnde Reagenz einen aktiven Sauerstoffgehalt zwischen 5 Prozent (%) und ungefähr 25 % aufweist.

12. Verfahrenen nach einem der vorhergehenden Ansprüche, wobei das Gas entwickelnde Reagenz eines von Wasserstoffperoxid, einem anorganischen Peroxid und einem Wasserstoffperoxidaddukt ist.

13. Verfahren nach Anspruch 12, wobei das Gas entwickelnde Reagenz Natriumpercarbonat ist.

14. Verfahren nach einem der vorhergehenden Ansprüche, ferner umfassend Konzentrieren einer Mischung der lebendigen Futterorganismen, der ungeschlüpften Zysten und der Zystenschalen vor dem Reagieren des Katalysators an der Oberfläche der Zysten mit dem Gas entwickelnden Reagenz.

15. Verfahren nach Anspruch 14, wobei der Schritt des Konzentrierens der Mischung der lebendigen Futterorganismen, der ungeschlüpften Zysten und der Zystenschalen Entfernen von ungefähr 70 Volumenprozent (Vol.-%) bis ungefähr 90 Vol.-% des flüssigen Mediums umfasst.

16. Verfahren nach einem der vorhergehenden Ansprüche, ferner umfassend Induzieren (64) der Überwinterung der lebendigen Futterorganismen nach Abscheiden der ungeschlüpften Zysten und der Zystenschalen.

17. Verfahren nach Anspruch 16, wobei der Schritt des Induzierens der Überwinterung (64) der lebendigen Futterorganismen Kühlen der lebendigen Futterorganismen auf eine Temperatur zwischen ungefähr 0 Grad Celsius (°C) unter ungefähr 6 °C umfasst.

18. Verfahren nach Anspruch 16 oder 17, ferner umfassend Bilden einer Paste aus überwinternden lebendigen Futterorganismen.

19. Verfahren nach Anspruch 18, wobei der Schritt des Bildens der Paste aus überwinternden lebendigen Futterorganismen Folgendes umfasst:
Konzentrieren der überwinternden lebendigen Futterorganismen in einem Sieb; und
Ableiten von überschüssigem Wasser in dem Sieb auf eine eisige Oberfläche.

## Revendications

1. Procédé (50) de production d'aliments aquacoles vivants, comprenant :
la fourniture (52) d'une pluralité de cystes comportant un catalyseur sur leur surface ; et
l'incubation (54) des cystes dans un milieu liquide pour faire éclore une partie des cystes et libérer une pluralité d'organismes comestibles vivants ;
et **caractérisé par** :
le fait de faire réagir (58) le catalyseur sur la surface des cystes avec un réactif de production de gaz pour générer une pluralité de bulles qui amènent des cystes non éclos et des enveloppes de cystes à remonter à la surface ; et
la séparation (60) des organismes comestibles vivants des cystes non éclos et des enveloppes de cystes qui remontent à la surface.

2. Procédé selon la revendication 1, dans lequel le catalyseur est un oxyde métallique.

3. Procédé selon la revendication 2, dans lequel l'oxyde métallique est du dioxyde de manganèse.

4. Procédé selon l'une quelconque des revendications précédentes, dans lequel l'étape de fourniture (52) des cystes qui comportent le catalyseur sur leur surface comprend :
la fourniture d'une solution de précurseur de catalyseur ; et
la mise en contact des cystes avec la solution de précurseur de catalyseur pour produire les cystes qui comportent le catalyseur sur leur surface.

5. Procédé selon la revendication 4, dans lequel l'étape de fourniture de la solution de précurseur de catalyseur comprend le mélange d'un précurseur de catalyseur avec de l'eau.

6. Procédé selon la revendication 5, dans lequel le précurseur de catalyseur est du permanganate de potassium.

7. Procédé selon la revendication 5 ou 6, dans lequel un rapport massique du précurseur de catalyseur sur les cystes se situe entre environ 0,0005:1 et environ 0,015:1.

8. Procédé selon la revendication 7, dans lequel le rapport massique du précurseur de catalyseur sur les cystes se situe entre environ 0,001:1 et environ 0,01:1.

9. Procédé selon l'une quelconque des revendications précédentes, dans lequel un rapport massique du réactif de production de gaz sur le milieu liquide dans un réservoir de séparation se situe entre environ 0,002:1 et environ 0,025:1.

10. Procédé selon la revendication 9, dans lequel le rapport massique du réactif de production de gaz sur le milieu liquide dans le réservoir de séparation se situe entre environ 0,005:1 et environ 0,015:1.

11. Procédé selon l'une quelconque des revendications précédentes, dans lequel le réactif de production de gaz présente une teneur en oxygène actif qui se situe entre environ 5 pour cent (%) et environ 25 %.

12. Procédé selon l'une quelconque des revendicationsprécédentes, dans lequel le réactif de production de gaz est un réactif parmi le peroxyde d'hydrogène, un peroxyde inorganique et un adduit de peroxyde d'hydrogène.

13. Procédé selon la revendication 12, dans lequel le réactif de production de gaz est du percarbonate de sodium.

14. Procédé selon l'une quelconque des revendications précédentes, comprenant en outre la concentration d'un mélange des organismes aquacoles vivants, des cystes non éclos et des enveloppes de cystes avant la réaction du catalyseur sur la surface des cystes avec le réactif de production de gaz.

15. Procédé selon la revendication 14, dans lequel l'étape de concentration du mélange des organismes aquacoles vivants, des cystes non éclos et des enveloppes de cystes comprend la suppression d'environ 70 pour cent en volume (vol %) à environ 90 vol % du milieu liquide.

16. Procédé selon l'une quelconque des revendications précédentes, comprenant en outre le fait d'induire (64) l'hibernation des organismes aquacoles vivants après leur séparation des cystes non éclos et des enveloppes de cystes.

17. Procédé selon la revendication 16, dans lequel l'étape consistant à induire l'hibernation (64) des organismes aquacoles vivants comprend le refroidissement des organismes aquacoles vivants jusqu'à une température qui se situe entre environ 0 degré Celsius (°C) et environ 6 °C.

18. Procédé selon la revendication 16 ou 17, comprenant en outre la formation d'une pâte d'organismes aquacoles vivants en hibernation.

19. Procédé selon la revendication 18, dans lequel l'étape de formation de la pâte d'organismes aquacoles vivants en hibernation comprend :
la concentration des organismes aquacoles vivants en hibernation dans un tamis ; et
l'évacuation par drainage de l'eau en excès dans le tamis sur une surface gelée.
